# EUROPEAN PATENT SPECIFICATION

(11) **EP 1 384 496 B1**
(45) Date of publication and mention of the grant of the patent: **29.11.2006**
(21) Application number: 03016860.3
(22) Date of filing: 24.07.2003
(51) Int. Cl.: A63B 22/02, B32B 21/00

(54) **Belt support board for a Treadmill for medical applications and exercise**
Bandträgerplatte für ein Laufband für medizinische Anwendungen und Übung
Planche de support pour la band d'un tapis roulant utilisé pour applications medicales et exercice

(30) Priority: 26.07.2002 IT PD20020206
(43) Date of publication of application: 28.01.2004
(73) Proprietor: RAM S.r.l., 35127 CAMIN (PD) (IT)
(72) Inventor: Abate, Piergiorgio, 35127 Camin (PD) (IT)
(74) Representative: Gustorf, Gerhard

(56) References cited:
- WO-A-99/36129
- US-A- 3 703 394
- US-A- 3 996 305
- US-A- 5 708 060

## Description

The invention relates to a treadmill as set forth in the preamble of claim 1. Such a treadmill is known from WO 99 36129 A.

Treadmills are used both for exercise and for the rehabilitation of the leg muscles. Said treadmills are mainly constituted by a fixed and if necessary inclinable surface, the bottom board, provided with a roller at each one of its ends, wherein a ring-closed belt, the mat, slides on this bottom board. The belt is set rotating by an electric motor connected with one or both the rollers of the bottom board. The user runs on the belt that slides on the bottom board, thus simultating a run on level or sloping ground.

One one the main problems that characterize treadmills is the sliding of the belt on the bottom board. In fact the belt must slide as smoothly as possible while the user runs or walks on it. In fact, when the user runs or walks on the belt, his/her weight presses the sliding belt against the bottom board, thus producing friction between the inner surface of the ring-closed belt (sliding belt) and the bottom board.

The friction generated by the sliding of the belt on the fixed board mainly depends on the type of material used for the board and on the tpye of material used for the inner surface of the ring-closed belt (sliding belt), as well as on the surface (structure) of the bottom board and on the structure of the inner surface of the ring-closed belt (sliding belt).

To improve the state of the art a new type of treadmill has been designed and implemented, with very low friction between the bottom board and the belt.

One of the main aims of the new treadmill is to reduce the friction between the sliding belt and the bottom board to a minimum.

Another aim of the invention is to reduce maintenance.

The techniques used at present by other treadmill manufacturers to reduce the friction coefficient between the inner surface of the sliding belt (ring-closed belt) and the surface of the belt support board consist in the introduction of substances with lubricating properties between these two surfaces: for example grease, various silicone oils, waxes, teflon, etc. Due to repeated use over time, these substances tend to be consumed or removed and therefore they must be periodically replaced. These substances are generally replaced by the user after a given time, which is usually recommended by the manufacturer, according to the number of hours of daily use. Some treadmills are provided with automatic devices for the introduction of the lubricating substances.

The object of this patent is constituted by a treadmill with a belt support board as claimed in claim 1.

The material used for the bottom of the treadmill is a composite material consisting of sheets of beechwood or another wood, 8-10 mm thick or even thicker before pressing, and of special thermosetting resins. The veneers are coated with resin by means of spreading machines and bonded to create the board of the desired thickness, by alternately crossing the direction of the wood veins of the different sheets at 90°, or at a different angle, or maintaining the same vein direction in the different sheets. The material is successively dried until reaching a predetermined degree of humidity.

At this point the board is pressed by means of special mechanical presses under a specific pressure of approximately 10,8 MPa (110 Kg/cm²) or another allowed value and the board is introduced in special furnaces at a suitable temperature, which may be approximately 150° C or another allowed temperature, in order to obtain the setting of the resin.

The board obtained by proceeding as described above is then cut with a special cutter and the precise thickness desired is obtained with abrasive paper with grain 120 or other grain or with another abrasion system. All the important and critical stages of the processing cycle are subjected to careful controls, in order to obtain a qualitatively acceptable product that complies to a precise standard. For this purpose, the following controls are carried out:
■ thickness, humidity, appearance, quality of the veneer to be accepted;
■ basic weight of the resin. This operation is repeated 4 or more times per day;
■ furnace temperature;
■ degree of humidity in the furnace;
■ degree of humidity of the wooden sheets;
■ temperature of the press plates;
■ thickness of the board;
■ pressure exerted by the press;
■ final thickness of the boards obtained.

The material of which the new belt support board is composed is a wood fibre crossed structure treated with modified phenolic resin.

The characteristics indicated below and the successive technical data are indicated only by way of example and are not to be understood as limitations on the type of material to be used and its technical characteristics. In fact, said characteristics may vary, since the object of the patent is constituted above all by the material construction principle, the various substances used and the processes adopted.

| Characteristics values unit of meas. standard | | | |
|---|---|---|---|
| Bending strength | 142 | MPa | DIN 53452 |
| Tensile strength | 142 | MPa | DIN 53455 |
| Perpendicular impact strength | 20.9 | KJ/m² | DIN 53453 |
| Parallel impact strength | 12.9 | KJ/m² | DIN 53453 |
| Perpendicular compression strength | 277 | MPa | DIN 53454 |
| Parallel compression strength | 167 | MPa | DIN 53454 |
| Perpendicular Rockwell hardness | 94 | hrm | DIN 53456 |
| Parallel Rockwell hardness | 82 | hrm | DIN 53456 |
| Modulus of bending elasticity | 13200 | MPa | DIN 53452 |
| Max. operating temperature | 150 | °C | DIN 7707 |
| Water absorption | 0.80 | % | DIN 53495 |
| Oil absorption | | % | DIN 7707 |
| Surface resistivity | | Ω | DIN 53482 |
| Conduction capacity | | Ω cm | DIN 53482 |
| Dielectric strength | | KV/cm | DIN 53481 |
| Dielectric loss factor (ang.) | | | DIN 53483 |
| Dielectric constant | | | DIN 53483 |

The object of this patent is constituted also by the use of a belt support board made of a material having chemical and physical characteristics and construction principles similar to those indicated and described above.

The chemical-mechanical treatments to which the surface of the bottom board is subjected are based on the use of the special materials indicated below:
■ light hydrodesulphurized and dearomatised petroleum naphtha or other solvent with similar chemical characteristics;
■ various types of paraffin or products with similar chemical characteristics diluted into this product until reaching a given concentration value;
■ if necessary, fluoridated compounds added to the obtained product in a given percentage (as dry product).

The special materials specified above penetrate into the pores of the material constituting the board surface as a result of a suitable mechanical operation. The actual penetration of the special materials at various levels (mm fractions) from the outer surface of the board is checked by means of a special microscope. After leaving the material to rest for a given period, the surface of the belt support board is polished with suitable mechanical tools.

The characteristics of the new treadmill will be highlighted in greater detail by the following description of one among many possible applications of the invention, illustrated in the attached drawings.

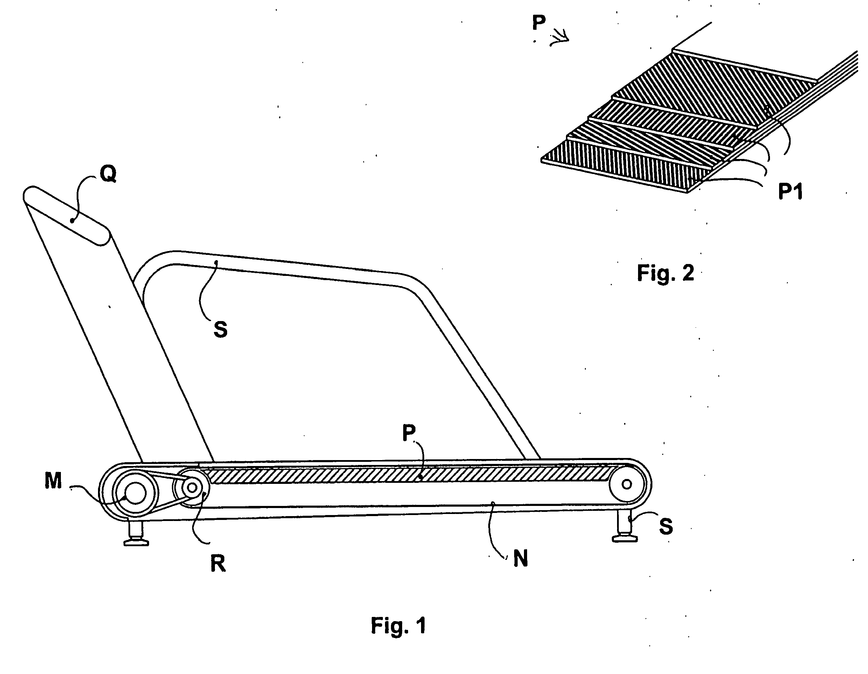

Figure 1 shows a vertical cross section of the new treadmill, comprising a support structure (S), a belt support board (P) having a roller (R) at each one of its ends, a belt (N) closed to form a ring around the two rollers (R), an electric motor (M) and a control panel (Q).

The support structure (S) is constituted by panels and metal or plastic bars that make up a connection and support structure for all the components of the new treadmill.

The belt support board (P) is fixed to the centre upper part of said structure (S).

Said belt support board (P) comprises wooden sheets (P1) impregnated with resins and bonded to one another as shown in Figure 2.

Said belt support board (P) comprises beechwood sheets (P1) having the same or different thickness, in any case a thickness of approximately 10 mm.

The sheets (P1) are coated with modified phenolic resin by means of suitable spreading machines and bonded in such a way as to form the belt support board (P) by overlapping the sheets (P1) with crossed veins or not and then dried until reaching a predetermined degree of humidity.

Successively, the bonded and dried sheets (P1) are compressed under high pressure, indicatively 10,8 MPa (110Kg/cm²) and heated at high temperature, indicatively 150°C. In this way the setting of the resin is obtained.

Finally, the belt support board (P) is brushed, sprayed or in any case impregnated with light hydrodesulphurized and dearomatised petroleum naphtha together with diluted paraffin and/or similar products, if necessary adding also fluoridated compounds, and polished with suitable brushes.

The belt support board (P) constituted as described above is very light, resistant to bending and impact, to wear, to chipping, has a low friction coefficient and excellent resistance to temperature variations.

At each one of the two opposite ends of said belt support board (P) there is a roller (R) whose width is identical to the width of the belt support board (P). Said two rollers (R) are parallel to each other and to the upper surface of the belt support board (P).

In particular, said two rollers (R) are positioned at the ends of the belt support board (P), so that their highest point is aligned with the upper surface of the belt support board (P).

The belt (N) is wound and rotates around the two rollers (R), said belt being constituted by a strip of plastic material, whose width is identical to the width of the rollers (R) and of the belt support board (P), said strip being closed to form a ring, in such a way as to be in contact with half of the circumference of each roller (R) and to slide on the belt support board (P) and under the same.

An electric motor (M), connected to at least one of the two rollers (R), sets the rollers (R) and the belt (N) rotating.

The control panel (Q), positioned on the structure (S) indicatively above one of the two rollers (R) at an height easily accessible for the user, allows the user to control the start, stop and speed adjustment of the motor (M) and consequently of the belt (N) on which he/she runs or walks.

Therefore, with reference to the above description and to the attached drawings, the following claims are put forth.

## Claims

1. Treadmill comprising a structure (S) bearing a belt support board (P) with two rollers (R) positioned at its opposite ends, said rollers (R) being parallel to each other and to the surface of the belt support board (P) and being enclosed by a ring-closed belt (N), and provided with an electric motor (M) connected to at least one of the rollers (R), wherein the belt support board (P) comprises sheets (P1) of beechwood or another wood, impregnated with phenolic resins, bonded to one another, dried and compressed under high pressure at high temperatures, **characterized in that** on the belt support board (P) light hydrodesulphurized and dearomatised petroleum naphtha is applied, together with diluted paraffin

2. Treadmill according to claim 1, **characterized in that** diluted fluoridated compounds are added to said petroleum naphtha with diluted paraffin and/or similar products.

3. Treadmill according to claims 1 or 2, **characterized in that** the pretoleum naphtha is applied in the form of a spray, with a brush, or in any case with mechanical pressures, in such a way as to ensure its penetration into the pores of the wood of the belt support board (P), and wherein said belt support board (P) is successively polished with brushes.

4. Treadmill according to any of the preceding claims, **characterized in that** the sheets (P1) of said belt support board (P) are bonded to one another with cross veins.

## Patentansprüche

1. Laufband mit einer Struktur (S) zur Lagerung eines Band-Stützbrettes (P), an dessen beiden Enden zwei Rollen (R) angeordnet sind, die zueinander und zur Oberseite des Stützbrettes (P) parallel verlaufen und von einem ringförmig geschlossenen Band (N) umschlungen werden, wobei mit wenigstens einer der Rollen (R) ein Elektromotor (M) verbunden ist und das Stützbrett (P) für das Band aus Lagen (P1) aus Buchenholz oder einem anderen Holz besteht, die mit Phenolharz imprägniert, miteinander verbunden, getrocknet und unter hohen Drücken und bei hohen Temperaturen miteinander verpresst sind, **dadurch gekennzeichnet, daß** auf das Stützbrett (P) für das Band (N) hydroentschwefeltes und dearomatisiertes Petroleum-Naphtha zusammen mit gelöstem Paraffin aufgebracht ist.

2. Laufband nach Anspruch 1, **dadurch gekennzeichnet, daß** dem Petroleum-Naphtha mit gelöstem Praffm und/oder mit ähnlichen Stoffen gelöste Fluoridverbindungen zugesetzt sind.

3. Laufband nach Anspruch 1 oder 2, **dadurch gekennzeichnet, daß** das Petroleum-Naphtha in Sprühform mittels einer Bürste oder jedenfalls unter mechanischem Druck aufgetragen ist, so daß es in die Poren des Holzes des Stützbrettes (P) eindringt, wonach das Stützbrett (P) mit Bürsten poliert wird.

4. Laufband nach einem der vorhergehenden Ansprüche, **dadurch gekennzeichnet, daß** die Lagen (P1) des Stützbrettes (P) mit kreuzweise verlaufender Maserung untereinander verbunden sind.

## Revendications

1. Tapis de course avec une structure (S) pour le maintien d'une planche (P) de support de tapis, dont les deux bouts sont munis de deux rouleaux (R) parallèles entre eux et à la surface supérieure de la planche (P) et autour desquels s'enroule un tapis (N) refermé sur lui-même en forme d'anneau, un au moins desdits rouleaux (R) étant relié à un moteur électrique (M) tandis que la planche (P) de maintien du tapis se compose de plusieurs couches (P1) en bois de hêtre, ou une autre sorte de bois, imprégnées à la résine phénolique, liées ensemble, séchées et pressées ensemble sous haute pression et à haute température, **caractérisé par le fait que** la planche (P) de maintien du tapis (N) est passée au naphte de pétrole hydrodésulfurisé et désaromatisé mélangé avec de la paraffine dissoute.

2. Tapis de course selon la revendication 1, **caractérisé par le fait que** des fluorures dissous sont ajoutés au naphte de pétrole mélangé à de la paraffine dissoute et/ou à des matières similaires.

3. Tapis de course selon la revendication 1 ou 2, **caractérisé par le fait que** le naphte de pétrole est appliqué sous forme de brouillard à l'aide d'une brosse ou en tout cas sous pression mécanique, de sorte qu'il pénètre dans les pores du bois de la planche (P), ladite planche étant ensuite polie à la brosse.

4. Tapis de course selon une des revendications précédentes, **caractérisé par le fait que** les couches (P1) de la planche (P) de maintien du tapis sont assemblées en croisant le sens des fils du bois.
